# FASCICULE DE BREVET EUROPEEN

(11) **EP 2 688 805 B1**
(45) Date de publication et mention de la délivrance du brevet: **31.12.2014**
(21) Numéro de dépôt: 11711502.2
(22) Date de dépôt: 23.03.2011
(51) Int. Cl.: B65B 11/42, B65B 51/14, B29C 65/18, B29C 65/78

(54) **PROCEDE POUR LE CONDITIONNEMENT DE PRODUITS, NOTAMMENT DES PORTIONS DE CHOCOLAT OU SIMILAIRES, ET EQUIPEMENT POUR LA MISE EN UVRE DU PROCEDE**
VERFAHREN ZUM VERPACKEN VON PRODUKTEN, INSBESONDERE VON SCHOKOLADE ODER DERGLEICHEN UND ANLAGE ZUR DURCHFÜHRUNG DES VERFAHRENS
METHOD FOR PACKAGING PRODUCTS, PARTICULARLY PORTIONS OF CHOCOLATE OR THE LIKE, AND FACILITY FOR IMPLEMENTING THE METHOD

(43) Date de publication de la demande: 29.01.2014
(73) Titulaire: Robert Bosch GmbH, 70442 Stuttgart (DE)
(72) Inventeur: CERMENO, Cesar-Carlos, 1205 Genève (CH)
(86) Numéro de dépôt international: PCT/EP2011/054449
(87) Numéro de publication internationale: WO 2012/126521

(56) Documents cités:
- EP-A1- 0 295 203
- GB-A- 592 746
- GB-A- 2 141 395
- GB-A- 2 206 327
- US-A- 4 648 236
- US-A- 5 477 661

## Description

### Domaine technique

La présente invention concerne un procédé de conditionnement de produits, notamment d'un produit alimentaire et en particulier une portion de chocolat ou similaire, dans un emballage plié et scellé, dans lequel on amène ledit produit sur un transporteur linéaire et l'on interpose une feuille découpée dans une bande de matériau d'emballage thermoscellable sur la trajectoire dudit produit.

Elle a également pour objet un équipement de conditionnement de produits, notamment d'un produit alimentaire et en particulier une portion de chocolat ou similaire, dans un emballage plié et scellé, pour la mise en oeuvre du procédé de l'invention.

### Technique antérieure

Le conditionnement de produits, en particulier de produits alimentaires présentés en portions indépendantes de petites dimensions pose de nombreux problèmes liés à la nature des produits, à leur fragilité et à leur conservation. Comme il s'agit habituellement de produits fabriqués en grande quantité, l'opération de conditionnement doit être extrêmement rapide, de sorte que les équipements de conditionnement doivent travailler à des cadences très élevées, soit plusieurs centaines de pièces par minute. En outre, les produits alimentaires ayant la caractéristique d'être fragiles et de ne pas supporter les températures élevées, la mise en place des matériaux d'emballage doit être effectuée avec douceur, sans heurts et, dans le cas de conditionnements étanches, les soudures de deux ou plusieurs feuilles de matériaux d'emballage doivent se faire sans contact direct avec les produits pour éviter les surchauffes locales. Enfin, dans le cas particulier de produits considérés comme des produits de luxe tels que le chocolat, le moindre défaut esthétique sur la surface du produit est à bannir, ce qui impose des contraintes particulièrement sévères aux opérateurs et à l'équipement lors du conditionnement.

On connaît déjà un procédé de conditionnement de ce type, selon lequel les produits sont acheminés linéairement et insérés dans une feuille d'un matériau d'emballage thermoscellable repliée en U pour former deux volets longitudinaux qui seront ensuite soudés dans une station de thermoscellage disposée à la périphérie d'un transporteur rotatif du type revolver. Un tel procédé ainsi que l'équipement pour la mise en oeuvre de ce procédé sont décrits dans la demande de brevet européen publiée sous le N° 0 295 203 A1,.

Cet équipement n'est pas adapté de façon optimale au conditionnement de produits de petites dimensions et à des cadences très élevées, de l'ordre de 600 pièces par minute, notamment parce que les stations de scellage sont conçues respectivement pour chauffer le matériau d'emballage disposé partiellement autour du produit et pour refroidir ce matériau en vue d'éviter une surchauffe locale du produit à emballer et un marquage de ce dernier. Cette double action nécessite du temps et ralentit la cadence du conditionnement. En outre, l'énergie de chauffage appliquée sur l'emballage est élevée, d'où la nécessité de procéder à un refroidissement, ce qui risque d'endommager le produit et impose des contraintes qui compliquent l'équipement.

Globalement ce procédé et l'équipement correspondant ne se prêtent pas au conditionnement de petits produits délicats et fragiles tels que des portions de chocolat en forme de carrés ou de rectangles emballés individuellement ou de produits similaires. On parle ici d'emballage avec pliage appliqué couramment appelé "die-fold" par opposition au pliage tubulaire soudé couramment appelé "flow-pack".

### Exposé de l'invention

La présente invention vise à pallier les inconvénients de l'art antérieur en proposant un procédé et un équipement pour effectuer un emballage avec pliage appliqué étanche, thermoscellé efficace et rapide au moyen d'une feuille d'un matériau thermoscellable, ce procédé permettant une action rapide et efficace qui préserve la qualité et l'esthétique du produit.

Dans ce but, le procédé tel que défini en préambule est caractérisé en ce que l'on introduit simultanément ledit produit et la feuille de matériau d'emballage thermoscellable dans un premier transporteur rotatif, appelé premier revolver, tout en repliant cette feuille en U autour dudit produit de manière à former deux volets, dits longitudinaux, de longueurs inégales, adjacents à un côté du produit, en ce que l'on amène ledit produit et son emballage dans cette configuration jusqu'à au moins une première station de thermoscellage dans laquelle on soude les deux volets pour réaliser un scellage étanche, dit scellage longitudinal et former un volet longitudinal le long dudit côté du produit, en ce que l'on transfère, à la sortie dudit premier revolver, ledit produit et son emballage scellé longitudinalement, dans une boîte de pliage pour former des plis latéraux appelés plis de bouts, en ce que l'on transfère ledit produit dans sa configuration scellée longitudinalement et comportant des plis de bouts dans un second transporteur rotatif appelé second revolver, associé à au moins deux paires de stations de thermoscellage, en ce que l'on amène successivement le produit dans chacune desdites au moins deux paires de stations de thermoscellage pour compléter le scellage étanche autour dudit produit, en ce que l'on procède, à la sortie dudit second revolver, au rabat des plis latéraux et du volet longitudinal, et en ce que l'on évacue le produit emballé de manière étanche en maintenant ledit volet longitudinal en appui sur l'emballage dudit produit.

De façon avantageuse, l'on utilise ledit premier revolver exclusivement pour effectuer le scellage longitudinal de l'emballage du produit et ledit second revolver exclusivement pour effectuer le scellage des plis de bouts de l'emballage du produit.

Dans la forme de réalisation préférée, l'on façonne les plis de bouts de l'emballage du produit dans une boîte de pliage qui est interposée entre ledit premier et ledit second revolver.

Ledit premier revolver et ledit second revolver sont avantageusement entraînés en sens contraire l'un de l'autre.

De préférence, l'on fait passer ledit produit et la feuille de matériau thermoscellable qui lui est associée d'une zone d'entrée dans ledit premier revolver, à travers une station de thermoscellage pour sceller ledit bord longitudinal jusque dans une zone de sortie de ce premier revolver pendant un temps égal à celui pendant lequel ledit produit et la feuille de matériau thermoscellable qui lui est associée passent d'une zone d'entrée dans ledit second revolver, à travers trois stations de thermoscellage successives pour sceller lesdits plis de bouts jusque dans une zone de sortie de ce second revolver.

De façon avantageuse, l'on rabat les plis des bouts et le volet longitudinal à la sortie dudit second revolver et l'on évacue le produit emballé après le collage dudit volet longitudinal au moyen d'un ruban transporteur et d'une courroie d'appui.

Dan la forme de réalisation préférée du procédé, l'on entraîne le ruban transporteur et la courroie d'appui à une vitesse supérieure à celle d'un poussoir de sortie du second revolver.

Par ailleurs, l'équipement pour la mise en oeuvre du procédé tel que défini en préambule est caractérisé en ce qu'il comporte des premiers moyens agencés pour introduire simultanément ledit produit et ladite feuille de matériau d'emballage thermoscellable dans un premier transporteur rotatif, appelé premier revolver, et pour replier cette feuille en U autour dudit produit de manière à former deux volets, dits longitudinaux, de longueurs inégales, adjacents à un côté du produit, au moins une station de thermoscellage agencée pour souder les deux volets en réalisant un scellage étanche, dit scellage longitudinal et former un volet longitudinal le long dudit côté du produit, une boîte de pliage agencée pour former des plis latéraux, appelés plis de bouts, disposée à la sortie dudit premier revolver, des deuxièmes moyens agencés pour transférer ledit produit dans sa configuration scellée longitudinalement et comportant des plis de bouts dans un second transporteur rotatif, appelé second revolver, au moins deux paires de stations de thermoscellage disposées à la périphérie dudit second revolver, des troisièmes moyens agencés pour procéder, à la sortie dudit second revolver, au rabat des plis de bouts et du volet longitudinal, et des quatrièmes moyens agencés pour évacuer le produit emballé de manière étanche en maintenant ledit volet longitudinal en appui sur l'emballage dudit produit.

Dans la forme de réalisation préférée de l'équipement selon l'invention, ledit second revolver est associé à trois stations de thermoscellage disposées à la suite l'une de l'autre et agencées pour effectuer chacune un scellage partiel des plis de bouts d'un même produit.

De façon avantageuse, ladite boîte de pliage est interposée entre ledit premier et ledit second revolver, la sortie dudit premier revolver correspondant à l'entrée dans la boîte de pliage et la sortie de la boîte de pliage correspondant à l'entrée dans le second revolver.

Ledit premier revolver peut comporter six jeux de pinces séparés angulairement d'un angle de 60°, le premier jeu de pinces correspondant à une zone d'entrée du revolver, le deuxième jeu à une zone d'attente et de maintien du produit avec ladite feuille thermoformable, le troisième jeu à une station de thermoscellage le long du bord longitudinal du produit, le quatrième jeu à une zone de sortie de ce premier revolver, les cinquième et sixième jeux de pinces correspondant à des positions de retour à vide vers ladite zone d'entrée.

Ledit second revolver peut comporter huit alvéoles séparées angulairement d'un angle de 45°, la première alvéole correspondant à une zone d'entrée du revolver, la deuxième à une zone d'attente et de maintien du produit, les trois suivantes à trois stations de thermoscellage successives pour sceller lesdits plis de bouts, la sixième à une zone de sortie de ce second revolver et les deux dernières à des positions de retour à vide vers ladite zone d'entrée.

De préférence, la station de sortie comporte un poussoir à déplacement axial dont la fonction consiste à éjecter le produit sur un ruban transporteur d'évacuation. Elle comporte en outre une courroie d'appui qui coopère avec ledit ruban transporteur pour appuyer sur le produit et son emballage et laisser le temps à une colle de scellage de prendre pour garantir la fermeture dudit emballage.

### Description sommaire des dessins

La présente invention et ses avantages apparaîtront mieux dans la description suivante d'un mode de réalisation donné à titre d'exemple non limitatif, en référence aux dessins annexés, dans lesquels:
- les figures 1A, 1B, 1C, 1D et 1E représentent respectivement les différentes étapes de l'emballage du produit telles qu'elles surviennent dans le cadre du déroulement du procédé selon l'invention,
- la figure 2 représente une vue schématique de la chaîne cinématique illustrant les phases du procédé au cours du cheminement du produit à travers l'équipement selon l'invention,
- la figure 3 représente une vue d'ensemble de l'équipement selon l'invention,
- la figure 4 est une vue en élévation frontale du premier transporteur rotatif, appelé revolver de pliage, avec la station de thermoscellage du bord longitudinal de l'emballage du produit,
- la figure 5 est une vue en élévation frontale du second transporteur rotatif, appelé revolver de scellage,
- la figure 6A est une vue de détail en perspective des mâchoires de scellage des bouts intérieurs des plis de bouts de l'emballage après son formage dans la boîte de pliage,
- la figure 6B est une vue de détail en perspective des mâchoires de scellage des bouts extérieurs des plis de bouts de l'emballage après son formage dans la boîte de pliage,

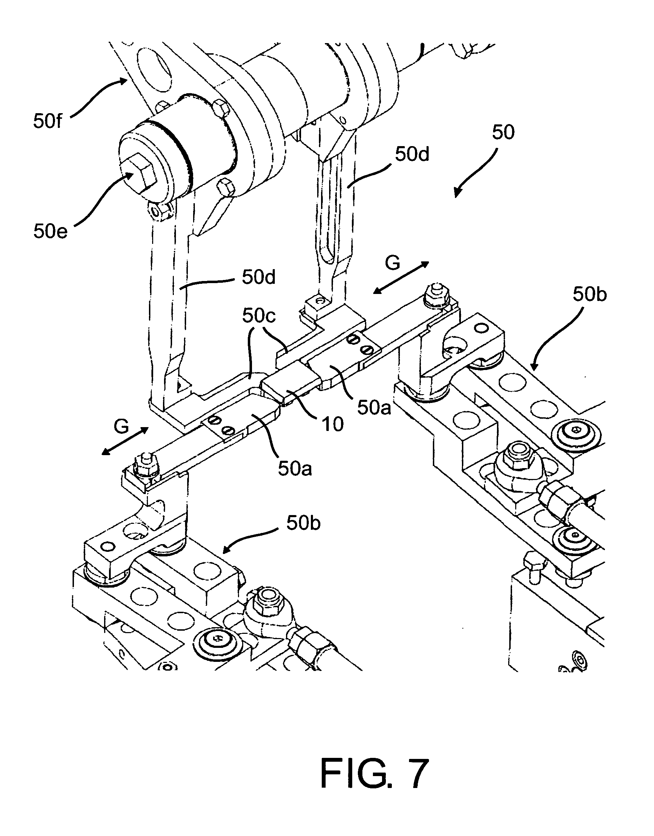

- la figure 7 illustre des détails de la station de pliage final avec les plieurs latéraux et un plieur longitudinal, et
- la figure 8 illustre des détails de la station de pliage final avec un plieur longitudinal, un poussoir de sortie, un ruban d'évacuation et une courroie d'appui supérieure.

### Meilleures manières de réaliser l'invention

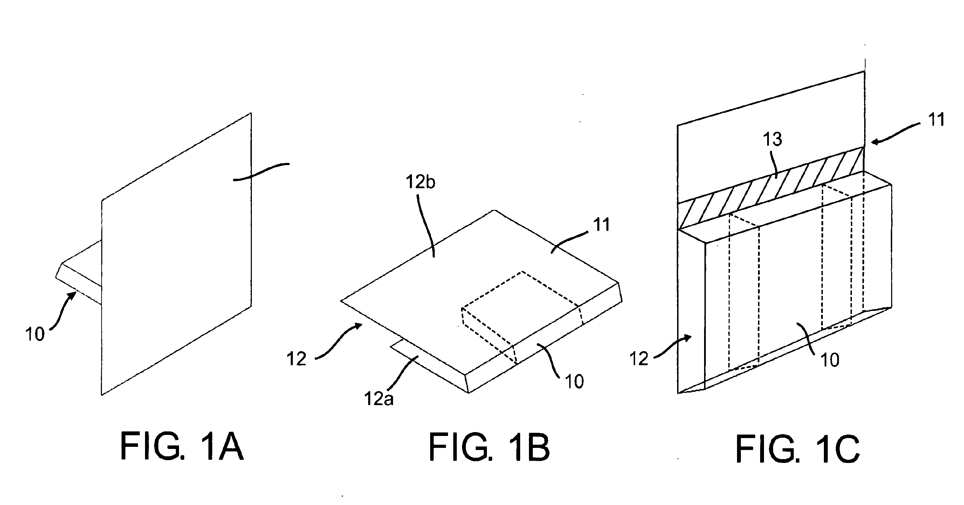

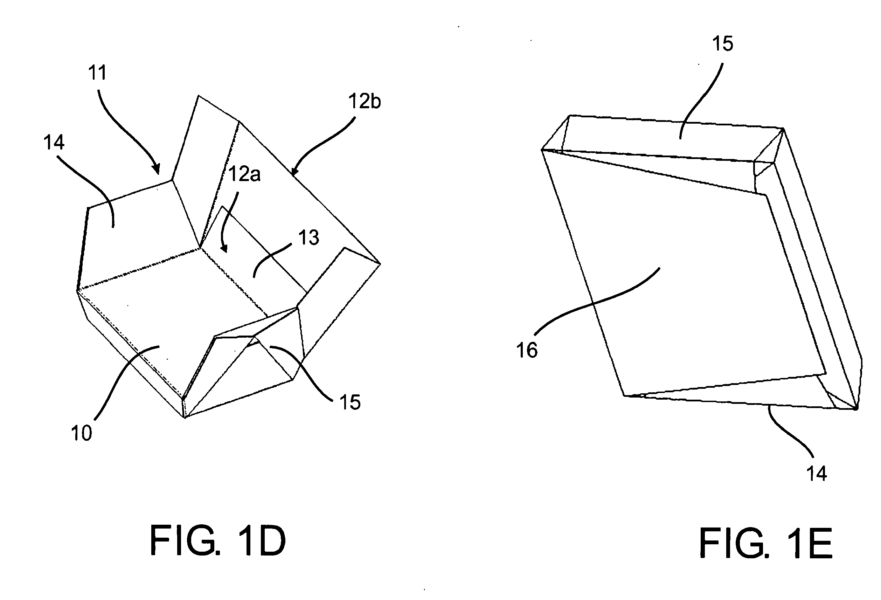

Les figures 1A, 1B, 1C, 1D et 1E représentent respectivement les différentes étapes de l'emballage du produit telles qu'elles surviennent dans le cadre du déroulement du procédé selon l'invention. La figure 1A montre un produit 10, qui est typiquement un carré ou un petit rectangle de chocolat, amené par un transporteur longitudinal et une feuille de matériau d'emballage 11, interposée sur la trajectoire du produit 10. La feuille de matériau d'emballage est de préférence découpée dans une bande et est constituée d'une matière ou d'un ensemble de matériaux thermoscellables, connus en soi.
La figure 1B montre la feuille de matériau d'emballage 11 pliée en U autour du produit 10, représenté en traits interrompus, à l'intérieur d'un fourreau 12 constitué par la feuille de matériau d'emballage 11 et présentant deux volets longitudinaux 12a et 12b de longueurs inégales, rabattus l'un sur l'autre et qui délimitent les deux côtés du U.
La figure 1C représente le produit 10 et sa feuille de matériau d'emballage 11 après constitution dudit fourreau 12 et scellage longitudinal des deux volets longitudinaux 12a et 12b de la feuille de matériau d'emballage sur une surface 13 de superposition. Ce scellage longitudinal s'effectue par thermoscellage du matériau d'emballage le long du bord correspondant du produit 10.
La figure 1D représente le produit 10 et son emballage partiellement formé à partir de la feuille de matériau d'emballage 11, à la sortie d'une boîte de pliage qui a pour fonction de plier les bouts 14 et 15 qui sont les extrémités latérales du fourreau 12, de part et d'autre de la surface 13 de superposition des deux volets longitudinaux 12a et 12b. Les bouts 14 et 15 sont constitués chacun de plus de deux épaisseurs de matériau d'emballage que l'on se propose de sceller pour rendre l'emballage du produit 10 totalement étanche. La boîte de pliage effectue la mise en forme des plis des bouts. Par la suite, ils devront passer dans des stations de thermoscellage pour être scellés.
La figure 1E représente le produit 10 presque totalement emballé. Les plis de bouts 14 et 15 ont été scellés et le volet, appelé volet longitudinal 16, constitué des deux volets 12a et 12b thermoscellés sur la surface de superposition 13 est rabattu puis collé sur la face inférieure du produit 10 emballé.
   Cet ensemble d'opérations doit s'effectuer à très haute cadence, soit environ six cents produits emballés à la minute, et l'équipement qui opère ces actions doit être performant et de préférence compact.

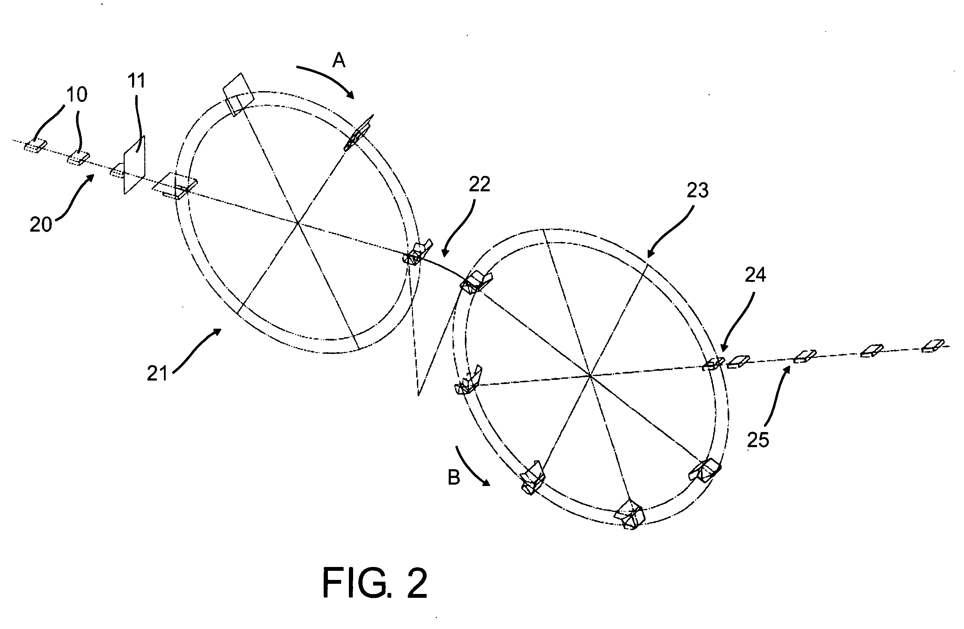

La figure 2 représente une vue schématique de la chaîne cinématique illustrant les phases du procédé au cours du cheminement du produit à travers l'équipement. Cet équipement comprend essentiellement un transporteur linéaire 20 qui achemine les produits 10 et les met au pas, un dispositif (non représenté) d'approvisionnement en feuilles 11 de matériau d'emballage qui sont interposées sur la trajectoire des produits 10, un premier transporteur rotatif appelé premier revolver 21 qui transporte les produits avec leur feuille de matériau d'emballage sur environ un demi-tour du revolver 21 dans le sens de la flèche A jusqu'à une sortie 22 correspondant à l'entrée du produit dans une boîte de pliage (non représentée). A la sortie de la boîte de pliage, les produits sont pris en charge par un second revolver 23, sur un secteur sensiblement supérieur à un demi-tour dans le sens de la flèche B jusqu'à une sortie 24 qui correspond à une station de pliage final. Après cette station, les produits sont repris en charge par un convoyeur linéaire d'évacuation 25 des produits emballés.

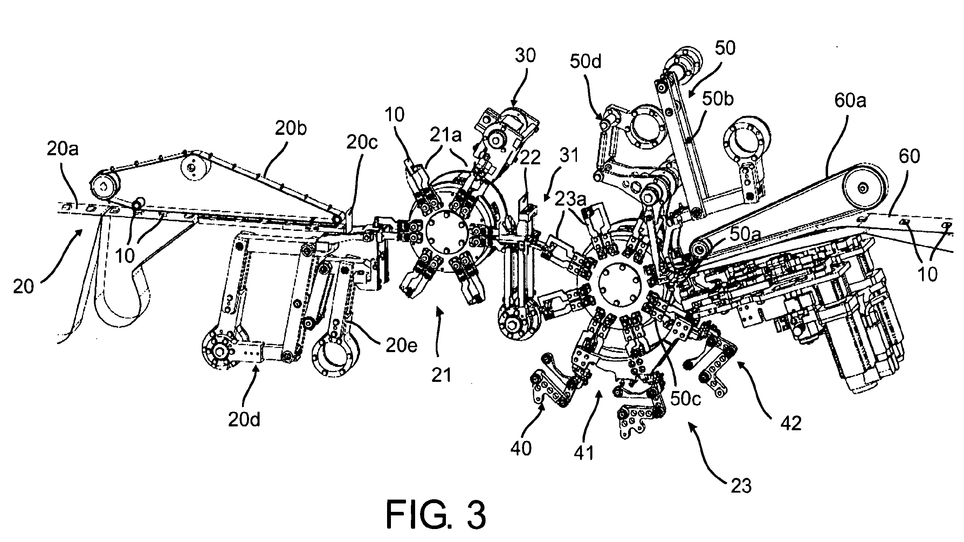

La figure 3 illustre une construction particulière de l'équipement selon l'invention qui est conçue pour mettre en oeuvre le procédé de conditionnement des produits conformément à la chaîne cinématique telle que décrite ci-dessus. Le transporteur linéaire 20 comporte un ensemble de bandes transporteuses sans fin 20a associées à une courroie à taquets de mise au pas 20b, à un poussoir linéaire 20c actionné par un mécanisme à parallélogramme 20d lui assurant un déplacement rectiligne, ainsi qu'à un contre poussoir 20e assurant la prise du produit et de la feuille de matériau d'emballage, entraîné par une came ou similaire. Cet ensemble de composants permet d'acheminer les produits 10 et les feuilles de matériau d'emballage correspondantes, de les positionner selon un pas prédéfini et de les mettre en place dans l'une des pinces réceptrices 21 a du premier revolver 21, dit revolver de pliage. La rotation de ce revolver 21 est séquentielle de manière à permettre aux produits et à son emballage en formation de passer dans des stations, notamment une première station de thermoscellage 30, qui est conçue pour assurer le scellage des deux volets de la feuille de matériau d'emballage et effectuer le scellage du pli le long du bord longitudinal du produit 10.

Après une rotation d'un demi-tour, les produits arrivent à la sortie 22 du premier revolver 21 dans une boîte de pliage 31 où les plis de bouts sont formés. A la sortie de la boîte de pliage, les produits sont transférés dans les alvéoles 23a du second revolver 23 qui tourne à contresens par rapport au revolver 21. Lesdites alvéoles ont une forme de réceptacle adéquate pour maintenir les plis déjà formés. Les produits 10 sont amenés successivement dans au moins deux paires de stations de thermoscellage et, dans l'exemple représenté, trois stations de thermoscellage 40, 41 et 42 des plis de bouts. Ces trois stations de thermoscellage sont identiques et accueillent successivement les mêmes produits. La raison de cette multiplication des stations est due au fait que les plis des bouts comptent plus de deux épaisseurs de matériau d'emballage et que le thermoscellage est d'autant plus long que les épaisseurs de matériau sont plus nombreuses. Le temps requis pour effectuer le thermoscellage des plis de bouts est ainsi sensiblement trois fois plus long que celui qui est nécessaire pour effectuer le scellage du bord longitudinal où seules deux couches sont à thermosceller l'une contre l'autre. Comme il est impossible d'appliquer les mâchoires chauffantes des stations de scellage sur le matériau avec pression directement sur le produit, on réalisera de façon particulièrement efficace le thermoscellage des couches superposées de matériau d'emballage en les serrant entre une mâchoire chauffante intérieure et une mâchoire chauffante extérieure, En raison de la durée extrêmement courte du séjour de chaque produit dans une station, cette durée étant approximativement de l'ordre de 50 millisecondes et du fait des limites imposées pour éviter une surchauffe locale du produit, la solution consiste, selon une particularité de l'invention, à faire passer plusieurs fois le même produit dans une station de thermoscellage. Dans le présent cas, le produit passe dans trois stations de chauffage successives et le temps de passage de chaque produit dans l'ensemble des stations est sensiblement égal au produit du temps de passage dans une station par le nombre de couches de matériau thermoscellable à souder.

Après l'opération de thermoscellage des plis de bouts, pour obtenir le pliage appliqué complet, il convient, d'abord de replier ou de rabattre ces bouts, et ensuite de rabattre par-dessus ces plis de bouts, le volet, dit volet longitudinal, 16 qui sera collé sur la face inférieure du produit. A cet effet l'installation comporte une station de sortie 50 pourvue, d'une part, de plieurs latéraux 50a actionnés par un mécanisme 50b et agencés pour rabattre les plis de bouts 14, 15 et, d'autre part, un plieur longitudinal en deux moitiés 50c portées par des bras pivotants et actionnées par un mécanisme pour rabattre le volet longitudinal 16 de la feuille de matériau d'emballage. Un poussoir à déplacement axial éjecte le produit sur un ruban transporteur 60, et une courroie d'appui 60a maintient les produits 10 en place sur le ruban transporteur 60 pour laisser le temps une colle de scellage de prendre pour garantir la fermeture de l'emballage.

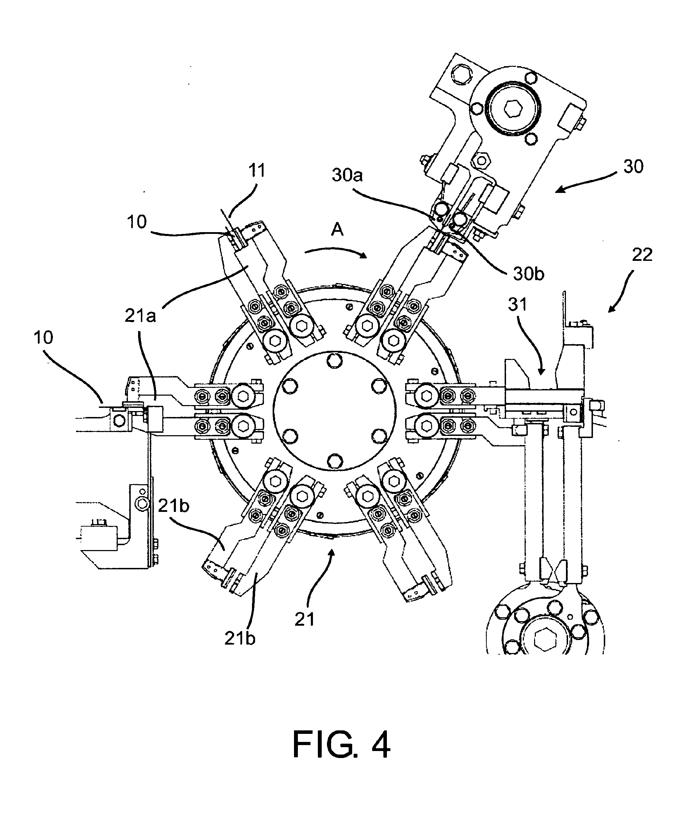

La figure 4 est une vue en élévation frontale du premier transporteur rotatif appelé premier revolver 21 ou revolver de pliage, qui comporte, dans ce cas, six pinces réceptrices 21 a qui reçoivent successivement un produit à chaque avancée du revolver d'un angle de 60°. Les pinces réceptrices 21 a sont définies par deux bras articulés 21 b formant une pince de saisie des produits, eux-mêmes constitués, dans cette phase du produit 10 proprement dit et de la feuille de matériau d'emballage 11 repliée en U. Lorsque le revolver 21 se déplace dans le sens de la flèche A, sa troisième position d'arrêt correspond à la station de thermoscellage 30 qui est conçue pour assurer le scellage des deux volets de la feuille de matériau d'emballage le long du pli du bord longitudinal du produit 10. Cette station de thermoscellage 30 comporte deux mâchoires ou paires de mâchoires chauffées 30a et 30b disposées sensiblement à l'extrémité de deux bras articulés qui permettent aux mâchoires de s'ouvrir et de se fermer. Le mouvement des mâchoires peut être commandé par n'importe quel moyen, mécanique comme par exemple une came, ou électrique comme un moteur, en fonction des caractéristiques spécifiques des mouvements et des paramètres fixés. La durée totale de séjour du produit à l'arrêt est de l'ordre de 50 millisecondes. Pendant cet intervalle de temps, la mise en place des mâchoires, le thermoscellage et le retrait des mâchoires doivent pouvoir se réaliser. La sortie du premier revolver en 22 correspond à l'entrée dans la boîte de pliage 31. Cette boîte de pliage 31 n'est pas représentée plus en détail, étant donné qu'il s'agit d'un composant tout à fait habituel bien connu qui est utilisé dans nombre d'équipements de conditionnement et en particulier dans l'équipement décrit dans le brevet européen antérieur N° 0 295 203 A1. Une telle boîte de pliage comporte des parois latérales en forme d'hélices qui permettent le façonnage des plis de bouts de la feuille de matériau d'emballage lorsque le produit 10 et son matériau d'emballage 11 sont amenés à l'intérieur de cette boîte.

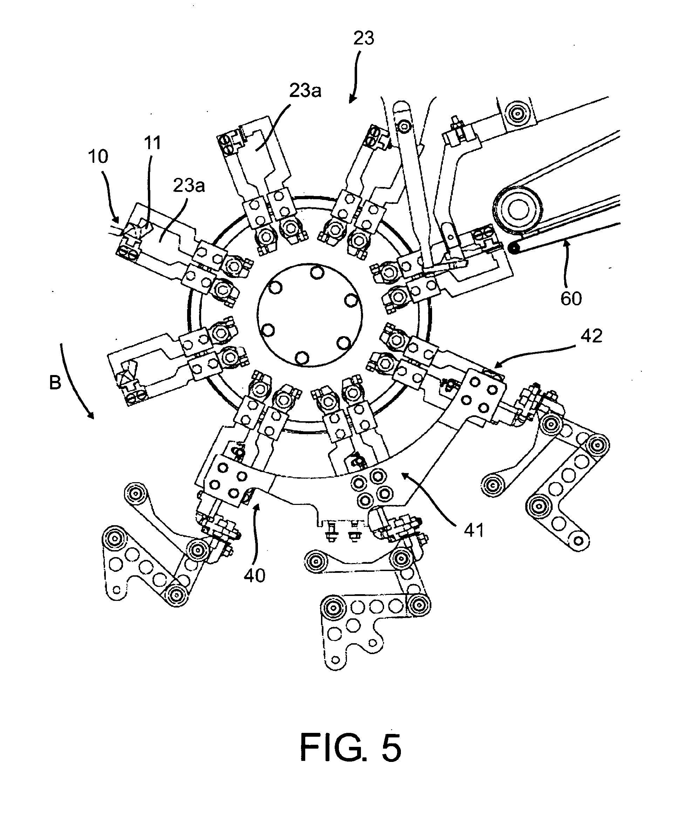

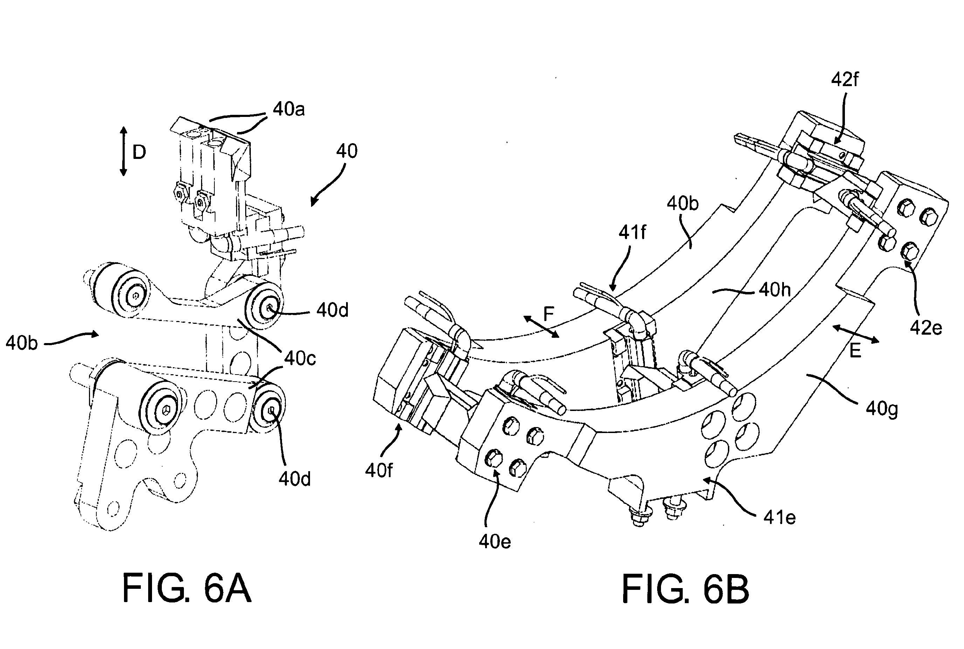

La figure 5 est une vue en élévation frontale du second transporteur rotatif, appelé second revolver 23 ou revolver de scellage. Le revolver 23 comporte huit alvéoles réceptrices 23a qui prennent en charge les produits 10 et leur feuille 11 de matériau d'emballage préalablement scellé le long du bord longitudinal. Le revolver 23 tourne dans le sens de la flèche B et amène chaque produit 10 successivement dans les stations de thermoscellage 40, 41 et 42. Les composants de ces stations de thermoscellage des plis de bouts 14 et 15 seront illustrés plus en détail par les figures 6A et 6B. Chaque produit 10 a un pli de bout droit et un pli de bout gauche et comme les mâchoires chauffantes de thermoscellage ne peuvent pas être appliquées directement contre la surface du produit 10, il est nécessaire de prévoir pour chacun des plis de bouts 14 et 15, une mâchoire chauffante intérieure et une mâchoire chauffante extérieure qui s'appliqueront de part et d'autre du matériau d'emballage pendant les opérations de thermoscellage. Chaque produit passe de l'une des stations de thermoscellage à la suivante et les trois stations 40, 41 et 42 contiennent en permanence un produit, chacun de ces produits passant systématiquement dans les trois stations avant d'être éjecté sur le ruban transporteur 60.

La figure 6A est une vue agrandie qui représente des mâchoires de scellage intérieures 40a des plis de bouts 14 et 15 (voir fig. 1D), par exemple de la station de thermoscellage 40. On notera que ces mâchoires sont disposées par paire et montées sur un mécanisme 40b à parallélogramme comportant deux bras 40c articulées sur deux axes fixes 40d solidaires du bâti de la station de thermoscellage 40 et dont les extrémités opposées portent les mâchoires 40a. L'un des bras 40d est actionné par un actionneur mécanique (non représenté) qui est par exemple constitué d'un ensemble mécanique comme une came, ou d'un moteur électrique, afin de déplacer les mâchoires 40a dans le sens de la double flèche D. Cette action a pour effet d'amener les mâchoires 40a dans l'espace délimité entre les deux plis de bouts de l'emballage du produit qui se trouve momentanément dans la station de thermoscellage 40, sensiblement parallèlement au pli de bout concerné, dans l'attente de la mise en place des mâchoires extérieures. Les mâchoires extérieures correspondantes, qui seront décrites ci-après en référence à la figure 6B, ont pour fonction d'appuyer le pli de bout concerné contre les mâchoires intérieures 40a, de sorte que le pli de bout est pincé entre les mâchoires extérieures et les mâchoires intérieures correspondantes pendant le temps nécessaire à une première phase de thermoscellage. Cette même opération s'effectue simultanément pour le pli de bout de gauche et le pli de bout de droite et recommence trois fois, successivement dans les stations de thermoscellage 40, 41 et 42. On notera que la construction de ces stations de thermoscellage 41 et 42 est identique à celle de la station de thermoscellage 40.

La figure 6B est une vue représentant les trois paires de mâchoires de scellage extérieures droites 40e, 41 e et 42e et les trois paires de mâchoires de scellage extérieures gauches 40f, 41f et 42f de chacune des stations de scellage 40, 41 et 42 des plis de bouts 14 et 15 (voir fig. 1 D). Toutes les mâchoires de scellage extérieures droites sont portées par un même support 40g et toutes les mâchoires extérieures gauches sont portées par un même support 40h. Le support 40g est équipé d'un mécanisme d'actionnement (non représenté) qui le déplace dans le sens de la double flèche E et le support 40h est équipé d'un mécanisme d'actionnement (non représenté) qui le déplace dans le sens de la double flèche F. Le déplacement des supports 40g et 40h amène, dans un premier temps, les mâchoires de thermoscellage en appui contre les plis de bouts, qui sont alors pincés entre les mâchoires de thermoscellage intérieures et les mâchoires de thermoscellage extérieures. Les trois stations successives 40, 41 et 42 permettront aux trois couches de matériau thermoscellable de se souder et de finaliser l'emballage étanche du produit 10.

Après le scellage des plis de bouts 14 et 15, la fonction étanche de l'emballage du produit 10 est assurée. Il convient alors de rabattre les deux plis de bouts 14 et 15 et de fermer le volet inférieur 16 (voir fig. 1E). Ces opérations s'effectuent dans la station de sortie 50 qui comporte deux plieurs latéraux 50a qui se déplacent selon les doubles flèches G, respectivement et qui sont actionnés par deux mécanismes 50b à parallélogrammes et agencés pour coulisser transversalement par rapport à la direction de déplacement longitudinal des produits 10 en vue de rabattre les plis de bouts. D'autre part, la station de sortie 50 comporte le plieur longitudinal fractionné en deux moitiés 50c, portées par deux bras latéraux 50d articulés autour d'un axe de pivotement 50e et actionnés par un mécanisme 50f pour rabattre le volet longitudinal de la feuille de matériau d'emballage sous le produit 10. Le volet longitudinal 16 est en fait collé au moyen d'une colle chaude, ce qui permet de maintenir les plis de bouts 14 et 15, et d'appliquer le volet longitudinal 16 sur l'emballage scellé autour du produit 10.

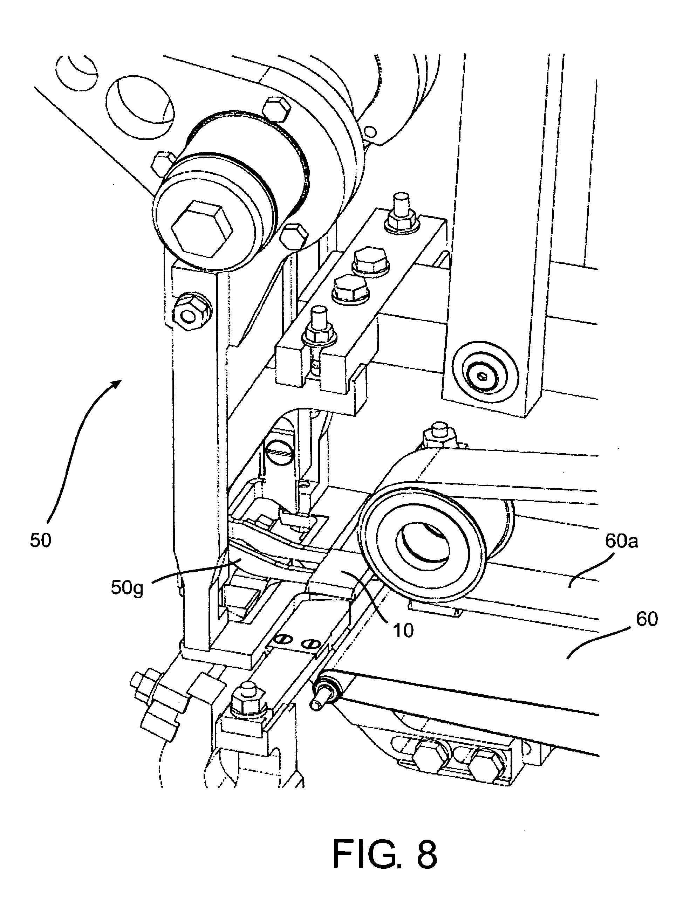

La figure 8 représente plus particulièrement la partie de la station de sortie 50 qui comprend un poussoir à déplacement axial 50g dont la fonction consiste à éjecter le produit 10 sur le ruban transporteur 60 d'évacuation des produits 10. Etant donné que le volet final 16 de la feuille de matériau d'emballage a été appliqué sur une zone encollée de l'emballage, il doit être maintenu appliqué sur cet emballage pendant la prise de la colle. Ce maintien est assuré par la courroie d'appui 60a, qui coopère avec le ruban transporteur 60 pour laisser le temps à la colle de prendre et garantir la fermeture de l'emballage. On notera que le volet final 16 de la feuille de matériau d'emballage est fermé dans le même sens que le sens du déplacement du produit, ce qui risque de provoquer l'ouverture de ce volet. Cet inconvénient est évité par une vitesse de défilement du ruban transporteur 60 et de la courroie d'appui 60a légèrement supérieure à celle du poussoir 50g.

### Possibilités d'application industrielle

Il ressort clairement de cette description que l'invention permet d'atteindre les buts fixés, à savoir effectuer un emballage par pliage appliqué étanche d'un produit fragile et délicat dont l'aspect esthétique doit être préservé, à très grande cadence, au moyen d'un équipement compact et fiable. La dimension et la nature des produits peuvent varier et le matériau d'emballage peut être adapté en fonction des produits. Les mécanismes d'entraînement peuvent être adaptés selon les besoins, mais les bases essentielles, notamment le principe de l'emballage étanche par utilisation d'un matériau thermoscellable, restent immuables. A cet effet, l'équipement comprend deux revolvers dont l'un comporte au moins une station de thermoscellage de deux couches de matériau d'emballage et dont l'autre comporte plusieurs stations de thermoscellage pour le scellage successif de plusieurs couches, par exemple trois couches de matériau d'emballage.

## Revendications

1. Procédé de conditionnement de produits, notamment d'un produit alimentaire et en particulier d'une portion de chocolat ou similaire, dans un emballage scellé, procédé dans lequel on amène ledit produit (10) sur un transporteur linéaire (20) et l'on interpose une feuille découpée (11) dans une bande de matériau d'emballage thermoscellable sur la trajectoire dudit produit, **caractérisé en ce que** l'on introduit simultanément ledit produit (11) et la feuille de matériau d'emballage thermoscellable (11) dans un premier transporteur rotatif, appelé premier revolver (21), tout en repliant cette feuille en U autour dudit produit de manière à former deux volets (12a, 12b) dits longitudinaux de longueurs inégales, adjacents à un côté du produit, **en ce que** l'on amène ledit produit et son emballage dans cette configuration jusqu'à au moins une première station de thermoscellage (30) dans laquelle on soude les deux volets (12a, 12b) pour réaliser un scellage étanche dit scellage longitudinal le long dudit côté du produit et former un volet longitudinal (16), **en ce que** l'on transfère, à la sortie dudit premier revolver(21), ledit produit et son emballage scellé longitudinalement, dans une boîte de pliage (31) pour former des plis latéraux appelés plis de bouts (14, 15), **en ce que** l'on transfère ledit produit dans sa configuration scellée longitudinalement et comportant des plis de bouts dans un second transporteur rotatif appelé second revolver (23), associé à au moins deux paires de stations de thermoscellage (40, 41, 429, **en ce que** l'on amène successivement le produit dans chacune desdites au moins deux paires de stations de thermoscellage pour compléter le scellage étanche autour dudit produit, **en ce que** l'on procède, à la sortie dudit second revolver (23), au rabat des plis latéraux et du volet longitudinal (16), et **en ce que** l'on évacue le produit emballé de manière étanche en maintenant ledit volet longitudinal (16) en appui sur l'emballage dudit produit.

2. Procédé selon la revendication 1, **caractérisé en ce que** l'on utilise ledit premier revolver (21) exclusivement pour effectuer le scellage longitudinal de l'emballage du produit et ledit second revolver (23) exclusivement pour effectuer le scellage des plis de bouts (14, 15) de l'emballage du produit.

3. Procédé selon la revendication 1, **caractérisé en ce que** l'on façonne les plis de bouts (14, 15) de l'emballage du produit dans une boîte de pliage (31) qui est interposée entre ledit premier (21) et ledit second (23) revolver.

4. Procédé selon la revendication 1, **caractérisé en ce que** l'on entraîne ledit premier revolver (21) et ledit second revolver (23) en sens contraire l'un de l'autre.

5. Procédé selon la revendication 1, **caractérisé en ce que** l'on fait passer ledit produit (10) et la feuille de matériau thermoscellable (11) qui lui est associée d'une zone d'entrée dans ledit premier revolver (21), à travers la station de thermoscellage (30) pour sceller lesdits bords longitudinaux des volets (12a, 12b) jusque dans une zone de sortie de ce premier revolver pendant un temps égal à celui pendant lequel ledit produit et la feuille de matériau thermoscellable qui lui est associée passent d'une zone d'entrée (22) dans ledit second revolver (23), à travers trois stations de thermoscellage successives (40, 41, 42) pour sceller lesdits plis de bouts (14, 15) jusque dans une zone de sortie (24) de ce second revolver (23).

6. Procédé selon la revendication 1, **caractérisé en ce que** l'on rabat les plis des bouts (14, 15) et le volet longitudinal (16) à la sortie dudit second revolver (23).

7. Procédé selon la revendication 1, **caractérisé en ce que** l'on évacue le produit emballé après le collage dudit volet longitudinal (16) au moyen d'un ruban transporteur (60) et d'une courroie d'appui (60a).

8. Procédé selon la revendication 7, **caractérisé en ce que** l'on entraîne le ruban transporteur (60) et la courroie d'appui (60a) à une vitesse supérieure à celle d'un poussoir de sortie (50g) du second revolver (23).

9. Équipement de conditionnement de produits, notamment d'un produit alimentaire et en particulier une portion de chocolat ou similaire, dans un emballage scellé, pour la mise en oeuvre du procédé selon les revendications précédentes, cet équipement comportant un transporteur linéaire (20) agencé pour déplacer ledit produit et un dispositif pour interposer une feuille découpée dans une bande de matériau d'emballage thermoscellable sur la trajectoire dudit produit, **caractérisé en ce qu'**il comporte des premiers moyens agencés pour introduire simultanément ledit produit (10) et ladite feuille de matériau d'emballage thermoscellable (11) dans un premier transporteur rotatif, appelé premier revolver (21), et pour replier cette feuille de matériau d'emballage thermoscellable (11) en U autour dudit produit (10) de manière à former deux volets (12a, 12b), dits longitudinaux, de longueurs inégales, adjacents à un côté du produit (10), au moins une station de thermoscellage (30) pour souder les deux volets (12a, 12b) en réalisant un scellage étanche, dit scellage longitudinal, le long dudit côté du produit et former un volet longitudinal (16), une boîte de pliage (31) agencée pour former des plis latéraux, appelés plis de bouts (14, 15), disposés à la sortie (22) dudit premier revolver (21), des deuxièmes moyens agencés pour transférer ledit produit (10) dans sa configuration scellée longitudinalement et comportant les plis de bouts (14, 15) dans un second transporteur rotatif appelé second revolver (23), au moins deux paires de stations de thermoscellage (40, 41, 42) disposées à la périphérie dudit second revolver (23), des troisièmes moyens agencés pour procéder, à la sortie (24) dudit second revolver (23), au rabat des plis de bouts (14, 15) et du volet longitudinal (16), et des quatrièmes moyens agencés pour évacuer le produit emballé de manière étanche en maintenant ledit volet longitudinal (16) en appui sur l'emballage dudit produit (10).

10. Equipement selon la revendication 9, **caractérisé en ce que** ledit second revolver (23) est associé à trois stations de thermoscellage (40, 41, 42) disposées à la suite l'une de l'autre et agencées pour effectuer chacune un scellage partiel des plis de bouts (14, 15) d'un même produit (10).

11. Equipement selon la revendication 9, **caractérisé en ce que** ladite boîte de pliage (31) est interposée entre ledit premier (21) et ledit second (23) revolver, la sortie (22) dudit premier revolver (21) correspondant à l'entrée dans la boîte de pliage (31) et la sortie de la boîte de pliage (31) correspondant à l'entrée dans le second revolver (23).

12. Equipement selon la revendication 9, **caractérisé en ce que** ledit premier revolver (21) comporte six jeux de pinces (21 a) séparés angulairement d'un angle de 60°, le premier jeu de pinces correspondant à une zone d'entrée du revolver (21), le deuxième jeu à une zone d'attente et de maintien du produit (10) avec ladite feuille thermoformable (11), le troisième jeu à une station de thermoscellage (30) le long du bord longitudinal du produit, le quatrième jeu à une zone de sortie (22) de ce premier revolver (21) et les cinquième et sixième jeux de pinces correspondant à des positions de retour à vide vers ladite zone d'entrée.

13. Equipement selon la revendication 9, **caractérisé en ce que** ledit second revolver (23) comporte huit alvéoles (23a) séparées angulairement d'un angle de 45°, la première alvéole correspondant à une zone d'entrée (22) du revolver, la deuxième à une zone d'attente et de maintien du produit (10), les trois suivantes aux trois stations de thermoscellage successives (40, 41, 42) agencées pour sceller lesdits plis de bouts (14, 15), la sixième à une zone de sortie (24) de ce second revolver (23) et les deux dernières à des positions de retour à vide vers ladite zone d'entrée (22).

14. Equipement selon la revendication 9, **caractérisé en ce que** la station de sortie (50) comporte un poussoir à déplacement axial (50g) dont la fonction consiste à éjecter le produit (10) sur un ruban transporteur d'évacuation (60).

15. Equipement selon la revendication 14, **caractérisé en ce que** la station de sortie (50) comporte en outre une courroie d'appui (60a), qui coopère avec ledit ruban transporteur (60) pour appuyer sur le produit et son emballage et laisser le temps à une colle de scellage de prendre pour garantir la fermeture dudit emballage.

## Patentansprüche

1. Verfahren zur Verpackung von Produkten, besonders eines Lebensmittelprodukts, und insbesondere einer Portion Schokolade oder Dergleichen, in einer versiegelten Verpackung, Verfahren, bei dem das Produkt (10) auf einen Linearförderer (20) gebracht und eine aus einem Band eines heißsiegelbaren Verpackungsmaterials ausgeschnittene Folie (11) auf der Bahn des Produkts zwischengefügt wird, **dadurch gekennzeichnet, dass** das Produkt (10) und die Folie aus heißsiegelbarem Verpackungsmaterial (11) gleichzeitig in einen ersten Drehförderer, erster Revolver (21) genannt, eingeführt werden, wobei diese Folie U-förmig um das Produkt gefaltet wird, um zwei so genannte Längsklappen (12a, 12b) ungleicher Längen zu formen, die einer Seite des Produkts benachbart sind, dass das Produkt und seine Verpackung in dieser Konfiguration bis zu mindestens einer Heißsiegelstation (30) gebracht werden, in der die zwei Klappen (12a, 12b) verschweißt werden, um eine dichte Versiegelung, Längsversiegelung genannt, entlang der Seite des Produkts herzustellen und eine Längsklappe (16) zu formen, dass am Ausgang des ersten Revolvers (21) das Produkt und seine längs versiegelte Verpackung in einen Faltkasten (31) übertragen werden, um Endfalten (14, 15) genannte seitliche Falten zu formen, dass das Produkt in seiner längs versiegelten Konfiguration und Endfalten aufweisend in einen zweiten Drehförderer, zweiter Revolver (23) genannt, übertragen wird, der mindestens zwei Paaren von Heißsiegelstationen (40, 41, 42) zugeordnet ist, dass das Produkt nacheinander in jede der mindestens zwei Paare von Heißsiegelstationen gebracht wird, um die dichte Versiegelung um das Produkt zu vervollständigen, dass am Ausgang des zweiten Revolvers (23) das Umschlagen der seitlichen Falten und der Längsklappe (16) durchgeführt wird, und dass das dicht verpackte Produkt entfernt wird, indem die Längsklappe (16) auf der Verpackung des Produkts in Anlage gehalten wird.

2. Verfahren nach Anspruch 1, **dadurch gekennzeichnet, dass** der erste Revolver (21) ausschließlich verwendet wird, um das Längsversiegeln der Verpackung des Produkts durchzuführen, und der zweite Revolver (23) ausschließlich verwendet wird, um das Versiegeln der Endfalten (14, 15) der Verpackung des Produkts durchzuführen.

3. Verfahren nach Anspruch 1, **dadurch gekennzeichnet, dass** die Endfalten (14, 15) der Verpackung des Produkts in einem Faltkasten (31) geformt werden, der zwischen den ersten (21) und den zweiten Revolver (23) eingefügt ist.

4. Verfahren nach Anspruch 1, **dadurch gekennzeichnet, dass** der erste Revolver (21) und der zweite Revolver (23) zueinander in Gegenrichtung angetrieben werden.

5. Verfahren nach Anspruch 1, **dadurch gekennzeichnet, dass** das Produkt (10) und die ihm zugeordnete Folie aus heißsiegelbarem Material (11) von einer Eingangszone in den ersten Revolver (21) durch die Heißsiegelstation (30), um die Längsränder der Klappen (12a, 12b) zu versiegeln, bis in eine Ausgangszone dieses ersten Revolvers während einer Zeit gleich derjenigen geführt werden, während der das Produkt und die ihm zugeordnete Folie aus heißsiegelbarem Material von einer Eingangszone (22) in den zweiten Revolver (23) durch drei aufeinanderfolgende Heißsiegelstationen (40, 41, 42), um die Endfalten (14, 15) zu versiegeln, bis in eine Ausgangszone (24) dieses zweiten Revolvers (23) durchlaufen.

6. Verfahren nach Anspruch 1, **dadurch gekennzeichnet, dass** die Endfalten (14, 15) und die Längsklappe (16) am Ausgang des zweiten Revolvers (23) umgeschlagen werden.

7. Verfahren nach Anspruch 1, **dadurch gekennzeichnet, dass** das verpackte Produkt nach dem Kleben der Längsklappe (16) mittels eines Förderbands (60) und eines Druckriemens (60a) entfernt wird.

8. Verfahren nach Anspruch 7, **dadurch gekennzeichnet, dass** das Förderband (60) und der Druckriemen (60a) mit einer höheren Geschwindigkeit als derjenigen eines Ausgangsstößels (50g) des zweiten Revolvers (23) angetrieben werden.

9. Ausrüstung zur Verpackung von Produkten, besonders eines Lebensmittelprodukts, und insbesondere einer Portion Schokolade oder Dergleichen, in einer versiegelten Verpackung, zur Durchführung des Verfahrens nach den vorhergehenden Ansprüchen, wobei diese Ausrüstung einen Linearförderer (20), der eingerichtet ist, um das Produkt zu verschieben, und eine Vorrichtung aufweist, um eine aus einem Band eines heißsiegelbaren Verpackungsmaterials ausgeschnittene Folie auf der Bahn des Produkts zwischenzufügen, **dadurch gekennzeichnet, dass** sie erste Einrichtungen, die eingerichtet sind, um das Produkt (10) und die Folie aus heißsiegelbarem Verpackungsmaterial (11) gleichzeitig in einen ersten Drehförderer, erster Revolver (21) genannt, einzuführen, und um diese Folie aus heißsiegelbarem Verpackungsmaterial (11) U-förmig um das Produkt (10) zu falten, um zwei so genannte Längsklappen (12a, 12b) ungleicher Längen zu formen, die einer Seite des Produkts (10) benachbart sind, mindestens eine Heißsiegelstation (30), um die zwei Klappen (12a, 12b) zu verschweißen, indem eine Längsversiegelung genannte dichte Versiegelung entlang der Seite des Produkts hergestellt wird, und eine Längsklappe (16) zu formen, einen Faltkasten (31), der eingerichtet ist, um seitliche Falten, Endfalten (14, 15) genannt, zu formen, der am Ausgang (22) des ersten Revolvers (21) angeordnet ist, zweite Einrichtungen, die eingerichtet sind, um das Produkt (10) in seiner längs verschweißten Konfiguration und die Endfalten (14, 15) aufweisend in einen zweiten Drehförderer, zweiter Revolver (23) genannt, zu übertragen, mindestens zwei Paare von Heißsiegelstationen (40, 41, 42), die am Umfang des zweiten Revolvers (23) angeordnet sind, dritte Einrichtungen, die eingerichtet sind, um am Ausgang (24) des zweiten Revolvers (23) das Umschlagen der Endfalten (14, 15) und der Längsklappe (16) vorzunehmen, und vierte Einrichtungen enthält, die eingerichtet sind, um das dicht verpackte Produkt zu entfernen, indem die Längsklappe (16) auf der Verpackung des Produkts (10) in Auflage gehalten wird.

10. Ausrüstung nach Anspruch 9, **dadurch gekennzeichnet, dass** der zweite Revolver (23) drei Heißsiegelstationen (40, 41, 42) zugeordnet ist, die nacheinander angeordnet und eingerichtet sind, um je eine Teilversiegelung der Endfalten (14, 15) des gleichen Produkts (10) auszuführen.

11. Ausrüstung nach Anspruch 9, **dadurch gekennzeichnet, dass** der Faltkasten (31) zwischen den ersten (21) und den zweiten Revolver (23) eingefügt ist, wobei der Ausgang (22) des ersten Revolvers (21) dem Eingang in den Faltkasten (31) und der Ausgang des Faltkastens (31) dem Eingang in den zweiten Revolver (23) entspricht.

12. Ausrüstung nach Anspruch 9, **dadurch gekennzeichnet, dass** der erste Revolver (21) sechs Sätze von Zangen (21a) aufweist, die winkelmäßig um einen Winkel von 60° getrennt sind, wobei der erste Satz von Zangen einer Eingangszone des Revolvers (21), der zweite Satz einer Warte- und Haltezone des Produkts (10) mit der wärmeformbaren Folie (11), der dritte Satz einer Heißsiegelstation (30) entlang des Längsrands des Produkts, der vierte Satz einer Ausgangszone (22) dieses ersten Revolvers (21) entspricht, und der fünfte und sechste Satz von Zangen Leerrücklaufstellungen zur Eingangszone entsprechen.

13. Ausrüstung nach Anspruch 9, **dadurch gekennzeichnet, dass** der zweite Revolver (23) acht winkelmäßig um einen Winkel von 45° getrennte Rahmen (23a) aufweist, wobei der erste Rahmen einer Eingangszone (22) des Revolvers, der zweite einer Warte- und Haltezone des Produkts (10) entspricht, die drei folgenden den drei aufeinanderfolgenden Heißsiegelstationen (40, 41, 42) entsprechen, die eingerichtet sind, um die Endfalten (14, 15) zu versiegeln, der sechste einer Ausgangszone (24) dieses zweiten Revolvers (23) entspricht, und die zwei letzten Leerrücklaufstellungen zur Eingangszone (22) entsprechen.

14. Ausrüstung nach Anspruch 9, **dadurch gekennzeichnet, dass** die Ausgangsstation (50) einen Stößel mit axialer Verschiebung (50g) aufweist, dessen Funktion darin besteht, das Produkt (10) auf ein Abfuhr-Förderband (60) auszustoßen.

15. Ausrüstung nach Anspruch 14, **dadurch gekennzeichnet, dass** die Ausgangsstation (50) außerdem einen Druckriemen (60a) aufweist, der mit dem Förderband (60) zusammenwirkt, um auf das Produkt und seine Verpackung zu drücken und einem Versiegelungsklebstoff die Zeit zum Festwerden zu lassen, um das Verschießen der Verpackung zu garantieren.

## Claims

1. Method for packaging products, notably a food product and in particular a portion of chocolate or similar element, in a sealed packaging, a method in which said product (10) is carried on a linear transporter (20) and a sheet (11) cut in a strip of heat-sealable packaging material is interposed on the trajectory of said product, **characterized in that** said product (10) and the sheet of heat-sealable packaging material (11) are inserted simultaneously into a first rotary transporter, called a first revolver (21), while folding this sheet in a U around said product so as to form two flaps (12a, 12b) called longitudinal flaps of unequal lengths, adjacent to one side of the product, **in that** said product and its packaging are carried in this configuration to at least one first heat-sealing station (30) in which the two flaps (12a, 12b) are welded in order to produce a leakproof seal called a longitudinal seal along said side of the product and to form a longitudinal flap (16), **in that**, at the exit of said first revolver (21), said product and its longitudinally sealed packaging are transferred into a folding box (31) in order to form lateral folds called end folds (14, 15), **in that** said product in its longitudinally sealed configuration and comprising end folds is transferred into a second rotary transporter called a second revolver (23), associated with at least two pairs of heat-sealing stations (40, 41, 42), **in that** the product is carried successively into each of said at least two pairs of heat-sealing stations in order to complete the leakproof seal around said product, **in that**, at the exit of said second revolver (23), the lateral folds and the longitudinal flap (16) are folded down, and **in that** the packaged product is discharged in a sealed manner while keeping said longitudinal flap (16) pressing on the packaging of said product.

2. Method according to Claim 1, **characterized in that** said first revolver (21) is used exclusively for carrying out the longitudinal sealing of the packaging of the product and said second revolver (23) exclusively for carrying out the sealing of the end folds (14, 15) of the packaging of the product.

3. Method according to Claim 1, **characterized in that** the end folds (14, 15) of the packaging of the product are fashioned in a folding box (31) which is interposed between said first revolver (21) and said second revolver (23).

4. Method according to Claim 1, **characterized in that** said first revolver (21) and said second revolver (23) are driven in directions counter to one another.

5. Method according to Claim 1, **characterized in that** said product (10) and the sheet of heat-sealable material (11) that is associated therewith are made to travel from an entrance zone in said first revolver (21), through the heat-sealing station (30) in order to seal said longitudinal edges of the flaps (12a, 12b) to an exit zone of this first revolver in a time equal to that during which said product and the sheet of heat-sealable material that is associated therewith travel from an entrance zone (22) in said second revolver (23), through three successive heat-sealing stations (40, 41, 42) in order to seal said end folds (14, 15) into an exit zone (24) of this second revolver (23).

6. Method according to Claim 1, **characterized in that** the end folds (14, 15) and the longitudinal flap (16) are folded down at the exit of said second revolver (23).

7. Method according to Claim 1, **characterized in that** the packaged product is discharged after the bonding of said longitudinal flap (16) by means of a conveyor band (60) and a pressure belt (60a).

8. Method according to Claim 7, **characterized in that** the conveyor band (60) and the pressure belt (60a) are driven at a speed higher than that of an exit pusher (50g) of the second revolver (23).

9. Facility for packaging products, notably a food product and in particular a portion of chocolate or similar element, in a sealed packaging, for the implementation of the method according to the preceding claims, this facility comprising a linear transporter (20) arranged to move said product and a device for interposing a sheet cut in a strip of heat-sealable packaging material on the trajectory of said product, **characterized in that** it comprises first means arranged for simultaneously inserting said product (10) and said sheet of heat-sealable packaging material (11) into a first rotary transporter, called a first revolver (21), and for folding this sheet of heat-sealable packaging material (11) in a U around said product (10) so as to form two flaps (12a, 12b), called longitudinal flaps, of unequal lengths, adjacent to one side of the product (10), at least one heat-sealing station (30) for welding the two flaps (12a, 12b) while producing a leakproof seal, called a longitudinal seal, along said side of the product and to form a longitudinal flap (16), a folding box (31) arranged to form lateral folds, called end folds (14, 15), and placed at the exit (22) of said first revolver (21), second means arranged to transfer said product (10) in its longitudinally sealed configuration and comprising the end folds (14, 15) into a second rotary transporter called a second revolver (23), at least two pairs of heat-sealing stations (40, 41, 42) placed at the periphery of said second revolver (23), third means arranged, at the exit (24) of said second revolver (23), to fold down the end folds (14, 15) and the longitudinal flap (16), and fourth means arranged for discharging the packaged product in a sealed manner while keeping said longitudinal flap (16) pressing on the packaging of said product (10).

10. Facility according to Claim 9, **characterized in that** said second revolver (23) is associated with three heat-sealing stations (40, 41, 42) placed after one another and arranged so that each carries out a partial sealing of the end folds (14, 15) of one and the same product (10).

11. Facility according to Claim 9, **characterized in that** said folding box (31) is interposed between said first revolver (21) and said second revolver (23), the exit (22) of said first revolver (21) corresponding to the entrance into the folding box (31) and the exit of the folding box (31) corresponding to the entrance into the second revolver (23).

12. Facility according to Claim 9, **characterized in that** said first revolver (21) comprises six sets of pincers (21a) separated angularly by an angle of 60°, the first set of pincers corresponding to an entrance zone of the revolver (21), the second set to a waiting and holding zone of the product (10) with said thermoformable sheet (11), the third set to a heat-sealing station (30) along the longitudinal edge of the product, the fourth set to an exit zone (22) of this first revolver (21) and the fifth and sixth sets of pincers corresponding to positions of return on empty to said entrance zone.

13. Facility according to Claim 9, **characterized in that** said second revolver (23) comprises eight cavities (23a) separated angularly by an angle of 45°, the first cavity corresponding to an entrance zone (22) of the revolver, the second to a waiting and holding zone of the product (10), the next three to the three successive heat-sealing stations (40, 41, 42) arranged to seal said end folds (14, 15), the sixth to an exit zone (24) of this second revolver (23) and the last two to positions of return on empty to said entrance zone (22).

14. Facility according to Claim 9, **characterized in that** the exit station (50) comprises an axial motion pusher (50g) of which the function consists in ejecting the product (10) onto a discharge conveyor band (60).

15. Facility according to Claim 14, **characterized in that** the exit station (50) also comprises a pressure belt (60a) which interacts with said conveyor band (60) to press on the product and its packaging and allow the time for a sealing adhesive to take in order to ensure the closure of said packaging.
